# EUROPEAN PATENT APPLICATION

(11) **EP 2 930 203 A1**
(43) Date of publication of application: **14.10.2015**
(21) Application number: 13860804.7
(22) Date of filing: 05.12.2013
(51) Int. Cl.: C08J 5/18, C08K 5/3492, C08L 101/00

(54) **LIGHT-BLOCKING FILM**

(30) Priority: 06.12.2012 JP 2012267538
(71) Applicant: Adeka Corporation, Tokyo 116-0012 (JP)
(72) Inventor: KAMIMOTO Tetsuo, Saitama-shi Saitama 336-0022 (JP); ISHIMA Yosuke, Saitama-shi Saitama 336-0022 (JP); OISHI Masahiro, Saitama-shi Saitama 336-0022 (JP)
(74) Representative: Jones, Helen M.M.
(86) International application number: PCT/JP2013/082672
(87) International publication number: WO 2014/088057

(57) **Abstract**

Provided is a light-blocking film capable of efficiently blocking ultraviolet radiation in a long wavelength region of 380 nm to 400 nm with the use of a small amount of an ultraviolet absorber added thereto. The light-blocking film is characterized by comprising at least one triazine compound represented by the following Formula (1) as an ultraviolet absorber or having the triazine compound coated thereon: 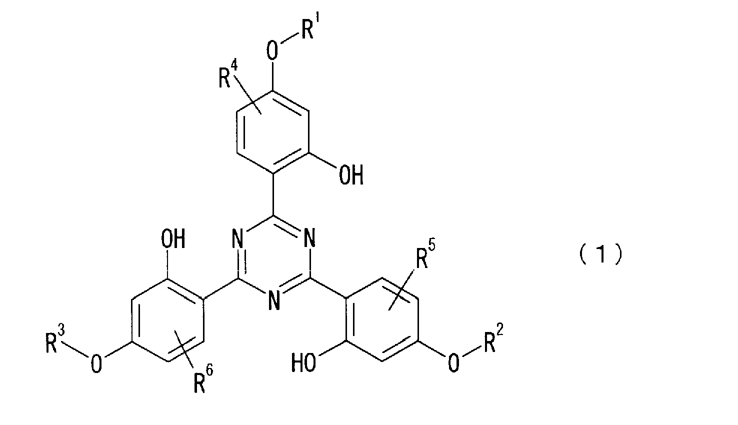 (wherein, R¹ to R³ may be the same or different and each represent a linear or branched alkyl group having 1 to 12 carbon atoms or the like, with a proviso that the alkyl group and the like are optionally substituted with a hydroxy group or the like and optionally interrupted by an oxygen atom, a sulfur atom, a carbonyl group, an ester group, an amide group or an imino group, the substitution and interruption optionally existing in combination; and R⁴ to R⁶ may be the same or different and each represent an alkyl group having 1 to 8 carbon atoms or an alkenyl group having 2 to 8 carbon atoms).

## Description

### TECHNICAL FIELD

The present invention relates to a light-blocking film which blocks ultraviolet radiation.

### BACKGROUND ART

On the window glasses of structures such as buildings and residential houses and those of vehicles such as automobiles, trains and airplanes, a light-blocking film is laminated for the purposes of cutting ultraviolet radiation harmful to the articles and human inside and cutting infrared radiation to prevent an increase in the room temperature.

In addition, in the photolithography process of the microelectronic circuit production, since unintended light (particularly light of the ultraviolet region) causes problems in the substrate production, a light-blocking film is used as a curtain or a temporary partition. In these light-blocking films, an ultraviolet absorber is used for cutting ultraviolet radiation (Patent Documents 1 to 3).

### RELATED ART DOCUMENTS

### PATENT DOCUMENTS

Patent Document 1: Japanese Unexamined Patent Application Publication No. 2003-112391
Patent Document 2: Japanese Unexamined Patent Application Publication No. 2008-265092
Patent Document 3: Japanese Unexamined Patent Application Publication No. H8-287715

### SUMMARY OF THE INVENTION

### PROBLEMS TO BE SOLVED BY THE INVENTION

However, conventional light-blocking film do not have satisfactory ultraviolet radiation-absorbing capacity and their performance of blocking ultraviolet radiation particularly in a long wavelength region of 380 nm to 400 nm still has room for improvement.

Furthermore, since conventional light-blocking films cut even the light in the visible region (450 nm to 500 nm), there is such a problem that the amount of visible light is reduced, darkening the space and causing visual fatigue.

Therefore, an object of the present invention is to provide a light-blocking film which is capable of efficiently blocking ultraviolet radiation in a long wavelength region of 380 nm to 400 nm with the use of a small amount of an ultraviolet absorber added thereto.

### MEANS FOR SOLVING THE PROBLEMS

In order to solve the above-described problems, the present inventors intensively studied and discovered that the problems can be solved by using a triazine-based ultraviolet absorber having a specific structure, thereby completing the present invention.

That is, the light-blocking film of the present invention is characterized in that it comprises at least one triazine compound represented by the following Formula (1), or that the triazine compound is coated thereon: 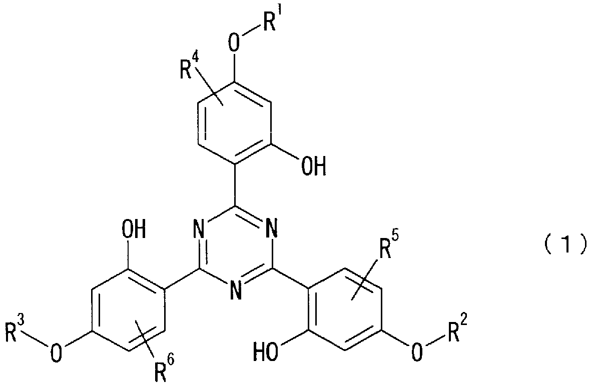 (wherein, R¹ to R³ may be the same or different and each represent a linear or branched alkyl group having 1 to 12 carbon atoms, a cycloalkyl group having 3 to 8 carbon atoms, an alkenyl group having 2 to 8 carbon atoms, an aryl group having 6 to 18 carbon atoms, an alkylaryl group having 7 to 18 carbon atoms or an arylalkyl group having 7 to 18 carbon atoms, with a proviso that these alkyl, cycloalkyl, alkenyl, aryl, alkylaryl and arylalkyl groups are optionally substituted with a hydroxy group, a halogen atom, an alkyl or alkoxy group having 1 to 12 carbon atoms and optionally interrupted by an oxygen atom, a sulfur atom, a carbonyl group, an ester group, an amide group or an imino group, the substitution and interruption optionally existing in combination; and R⁴ to R⁶ may be the same or different and each represent an alkyl group having 1 to 8 carbon atoms or an alkenyl group having 2 to 8 carbon atoms).

In the light-blocking film of the present invention, it is preferred that the triazine compound be one which is represented by the following Formula (2): 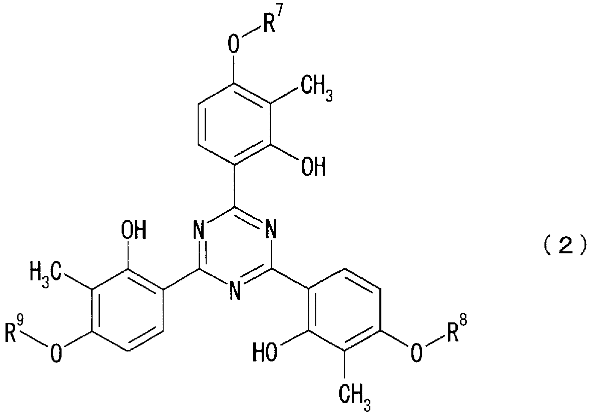 (wherein, R⁷ to R⁹ may be the same or different and each represent a linear or branched alkyl group having 1 to 12 carbon atoms, with a proviso that these alkyl groups are optionally substituted with a hydroxy group, a halogen atom or an alkoxy group and optionally interrupted by an oxygen atom, a sulfur atom, a carbonyl group, an ester group, an amide group or an imino group).

Further, in the light-blocking film of the present invention, it is preferred that the triazine compound be kneaded into a synthetic resin used as a base material of the film.

Still further, in the light-blocking film of the present invention, it is preferred that the triazine compound be coated on a base film.

Yet still further, it is preferred that the light-blocking film of the present invention further comprises a near-infrared absorber, or that the near-infrared absorber be coated on the surface thereof.

### EFFECTS OF THE INVENTION

According to the present invention, a light-blocking film which is capable of efficiently blocking ultraviolet radiation in a long wavelength region of 380 nm to 400 nm with the use of a small amount of an ultraviolet absorber added thereto can be provided.

### BRIEF DESCRIPTION OF THE DRAWINGS

Fig. 1 is a graph showing the results of Example 1, Comparative Example 1, Comparative Example 2, Comparative Example 3 and Comparative Example 4.
Fig. 2 is a graph showing the results of Example 2.

### MODE FOR CARRYING OUT THE INVENTION

The present invention will now be described in detail.

The light-blocking film of the present invention comprises at least one triazine compound represented by the following Formula (1) as an ultraviolet absorber: 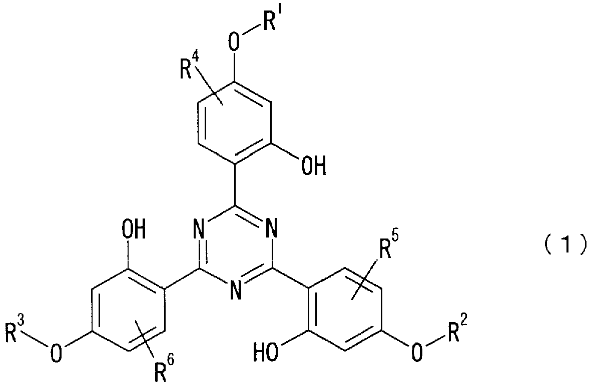 (wherein, R¹ to R³ may be the same or different and each represent a linear or branched alkyl group having 1 to 12 carbon atoms, a cycloalkyl group having 3 to 8 carbon atoms, an alkenyl group having 2 to 8 carbon atoms, an aryl group having 6 to 18 carbon atoms, an alkylaryl group having 7 to 18 carbon atoms or an arylalkyl group having 7 to 18 carbon atoms, with a proviso that these alkyl, cycloalkyl, alkenyl, aryl, alkylaryl and arylalkyl groups are optionally substituted with a hydroxy group, a halogen atom, an alkyl or alkoxy group having 1 to 12 carbon atoms and optionally interrupted by an oxygen atom, a sulfur atom, a carbonyl group, an ester group, an amide group or an imino group, the substitution and interruption optionally existing in combination; and R⁴ to R⁶ may be the same or different and each represent an alkyl group having 1 to 8 carbon atoms or an alkenyl group having 2 to 8 carbon atoms).

In the Formula (1), examples of the linear or branched alkyl group having 1 to 12 carbon atoms which is represented by R¹ to R³ include linear or branched alkyl groups such as methyl, ethyl, propyl, isopropyl, butyl, isobutyl, sec-butyl, tert-butyl, amyl, tert-amyl, hexyl, octyl, sec-octyl, tert-octyl, 2-ethylhexyl, decyl, undecyl and dodecyl, among which hexyl group is preferred because of its excellent blocking of ultraviolet radiation in a long wavelength region. Examples of the cycloalkyl group having 3 to 8 carbon atoms include cyclopropyl, cyclopentyl, cyclohexyl, cycloheptyl and cyclooctyl groups.

Examples of the alkyl group having 1 to 8 carbon atoms which is represented by R⁴ to R⁶ include methyl, ethyl, propyl, isopropyl, butyl, sec-butyl, tert-butyl, isobutyl, amyl, tert-amyl, hexyl, octyl and tert-octyl groups, among which methyl group is preferred because of its excellent blocking of ultraviolet radiation in a long wavelength region.

Examples of the alkenyl group having 2 to 8 carbon atoms which is represented by R¹ to R³ and R⁴ to R⁶ include linear and branched propenyl, butenyl, pentenyl, hexenyl, heptenyl and octenyl groups, regardless of the position of the unsaturated bond.

Examples of the aryl group having 6 to 18 carbon atoms which is represented by R¹ to R³ include phenyl, naphthyl and biphenyl groups; examples of the alkylaryl group having 7 to 18 carbon atoms include methylphenyl, dimethylphenyl, ethylphenyl and octylphenyl groups; and examples of the arylalkyl group having 7 to 18 carbon atoms include benzyl, 2-phenylethyl and 1-methyl-1-phenylethyl groups. Examples of a substituted and/or interrupted aryl group include 4-methylphenyl, 3-chlorophenyl, 4-benzyloxyphenyl, 4-cyanophenyl, 4-phenoxyphenyl, 4-glycidyloxyphenyl and 4-isocyanuratephenyl groups.

The ester group is a group formed by dehydration condensation between a carboxylic acid and an alcohol, and the amide group is a group formed by dehydration condensation between a carboxylic acid and an amine.

Examples of the alkoxy group having 1 to 12 carbon atoms include methoxy, ethoxy, propoxy, butoxy, pentoxy, hexaoxy, octoxy, nonyloxy, decyloxy, undecyloxy and dodecyloxy groups.

Examples of a substituted and/or interrupted alkyl or cycloalkyl group which may be represented by R¹ to R³ include 2-hydroxypropyl, 2-methoxyethyl, 3-sulfonyl-2-hydroxypropyl and 4-methylcyclohexyl groups.

The triazine compound of the present invention which is represented by the Formula (1) is preferably a compound represented by the following Formula (2): 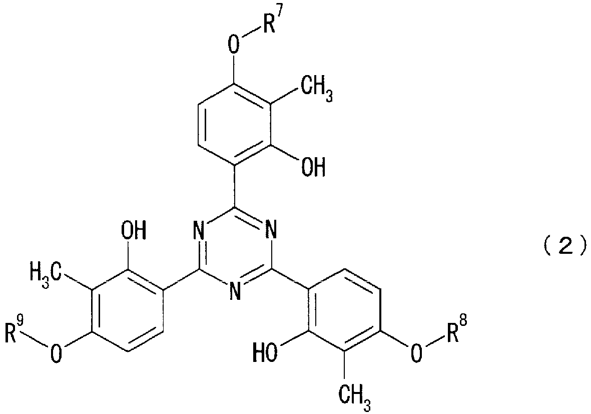 (wherein, R⁷ to R⁹ may be the same or different and each represent a linear or branched alkyl group having 1 to 12 carbon atoms, with a proviso that these alkyl groups are optionally substituted with a hydroxy group, a halogen atom or an alkoxy group and optionally interrupted by an oxygen atom, a sulfur atom, a carbonyl group, an ester group, an amide group or an imino group).

Examples of the linear or branched alkyl group having 1 to 12 carbon atoms which is represented by R⁷ to R⁹ in the Formula (2) include the same groups as those represented by the R¹ to R³ in the Formula (1). Further, examples of the alkoxy group are the same as those described above.

Examples of the compound of the present invention which is represented by the Formula (1) or (2) include, but not limited to, the following Compound Nos. 1 to 5.

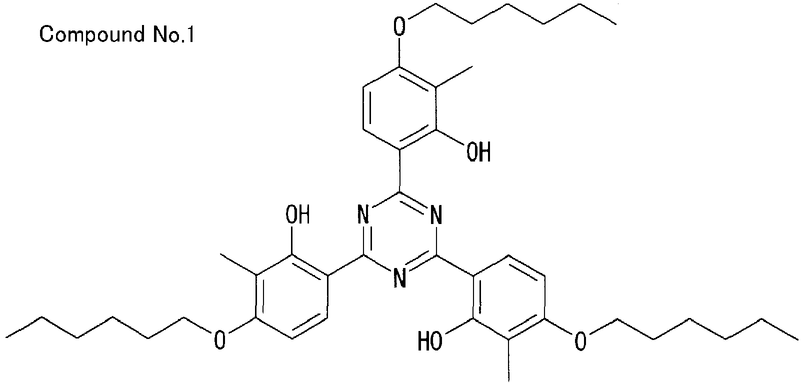

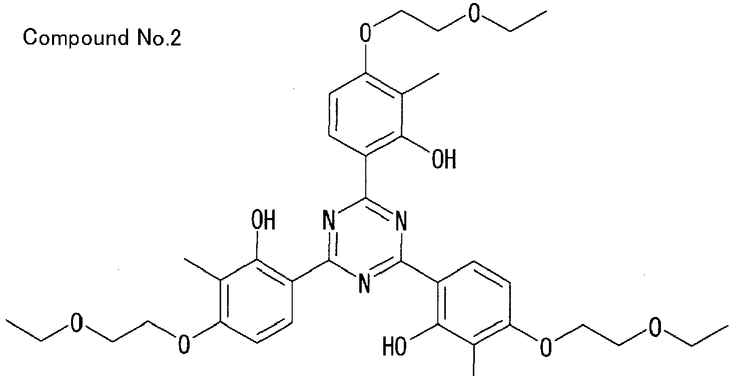

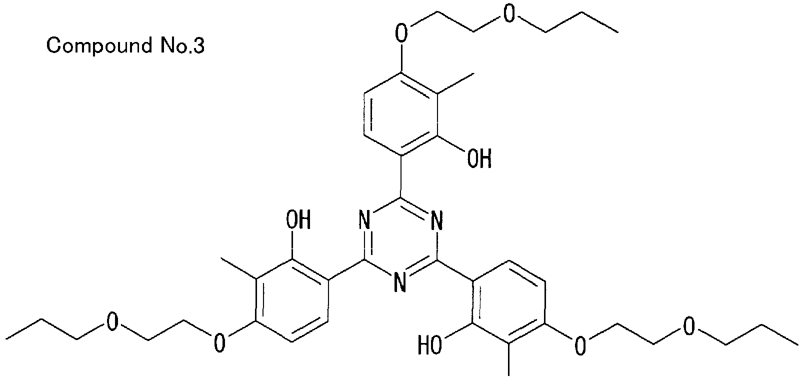

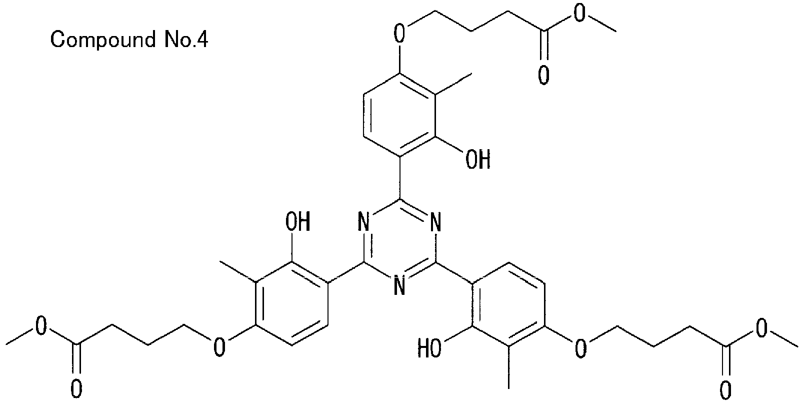

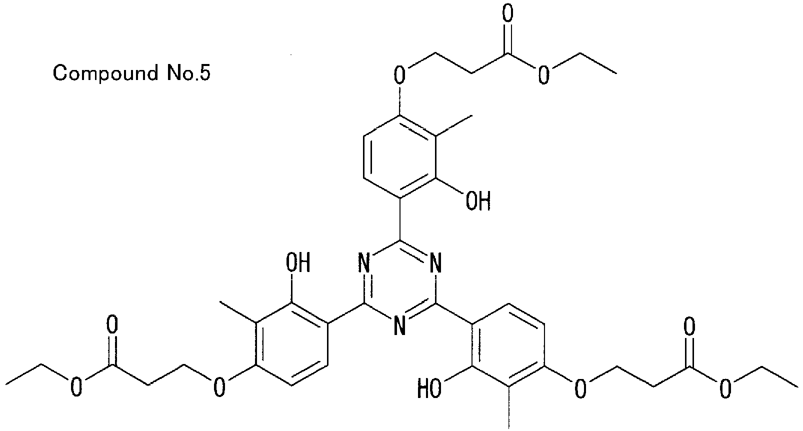

The light-blocking film of the present invention may further comprise a near-infrared absorber to block near-infrared radiation.

The near-infrared absorber according to the present invention is not particularly restricted, and it may be any substance that shows absorption in the near-infrared region. Examples thereof include polymethine dyes (cyanine dyes), indolenine cyanine dyes, phthalocyanine dyes, naphthalocyanine dyes, naphthol metal complex dyes, squarylium dyes, triazo dyes, dithiol metal complex salt dyes, pyrylium dyes, thiapyrylium dyes, indoaniline dyes, azoanthraquinone dyes, naphthoquinone dyes, anthraquinone dyes, bis(dithiolene) dyes, triphenylmethane dyes, aminium (aluminum) dyes, and diimmonium dyes. Further, an inorganic near-infrared absorber may also be used, and examples thereof include carbon blacks; tin oxide doped with antimony oxide or indium oxide; and oxides, carbides and borides of metals belonging to Group 4A, 5A or 6A of the periodic table.

The light-blocking film of the present invention can be obtained by kneading an ultraviolet absorber represented by the Formula (1) or (2) into a synthetic resin directly or along with a binder resin and/or an additive(s) and then molding the synthetic resin into a film. Alternatively, the ultraviolet absorber may be applied to a base material made of a synthetic resin by coating or the like.

A method for obtaining the light-blocking film of the present invention is not particularly restricted and, for example, any of the following three methods can be utilized.

(Method 1) A method of blending the ultraviolet absorber represented by the Formula (1) or (2) into a synthetic resin, kneading this synthetic resin to obtain an ultraviolet absorber resin composition, and then heat-molding the thus obtained composition to prepare a film or a sheet.

(Method 2) A method of preparing a paint or coating liquid containing the ultraviolet absorber represented by the Formula (1) or (2) and then applying the paint or coating liquid on a film or sheet containing a synthetic resin as a base material.

(Method 3) A method of incorporating the ultraviolet absorber represented by the Formula (1) or (2) into an adhesive and coating this adhesive on a film to prepare a laminated resin film or sheet.

In the Method 1 in which the ultraviolet absorber represented by the Formula (1) or (2) is blended into a resin and this resin is then kneaded and heat-molded, the transparency of the synthetic resin is preferably as high as possible when it is made into a resin film. Specific examples of such a synthetic resin include, but not limited to, polyethylenes; polypropylenes; polystyrenes; copolymers of polyethylene and cycloolefin such as norbornene; polyacrylic acids; polyacrylates; polyacrylonitriles; vinyl compounds and addition polymers thereof, such as polyvinyl acetate, polyvinyl chloride and polyvinyl fluoride; polymethacrylic acids; polymethacrylates; copolymers of vinyl compounds or fluorocarbon compounds, such as polyvinylidene chloride, polyvinylidene fluoride, polyvinylidene cyanide, vinylidene fluoride-trifluoroethylene copolymers, vinylidene fluoride-tetrafluoroethylene copolymers and vinylidene cyanide-vinyl acetate copolymers; fluorine-containing compounds such as polytrifluoroethylene, polytetrafluoroethylene and polyhexafluoropropylene; polyamides such as nylon 6 and nylon 66; polyimides; polyurethanes; polypeptides; polyesters such as polyethylene terephthalate; polyethers such as polycarbonate, polyoxymethylene, polyethylene oxide and polypropylene oxide; epoxy resins; polyvinyl alcohols; and polyvinyl butyrals.

In the preparation method, the processing temperature, film-forming conditions and the like are somewhat variable depending on the base resin to be used; however, the light-blocking film of the present invention can be obtained by, for example, a method in which the ultraviolet absorber represented by the Formula (1) or (2) is added to powder or a pellet of the base resin and heat-dissolved at 150 to 350°C; the resultant is subsequently molded into a film, or extruded into a film or a raw sheet using an extruder; and the thus obtained film or raw sheet is stretched uniaxially or biaxially at a temperature of 30 to 120°C and a draw ratio of 2 to 5 to obtain a 10 to 200 µm-thick film. It is noted here that, at the time of the kneading, in addition to the additive(s) normally used in ordinary resin molding such as an infrared absorber, an antioxidant, a light stabilizer, a flame retardant and/or a plasticizer, a dye or a pigment for controlling the color tone or other ultraviolet absorber may also be added.

The ultraviolet absorber represented by the Formula (1) or (2) is added in an amount of preferably 0.001 to 20% by mass, more preferably 0.01 to 10% by mass, particularly preferably 0.1 to 5% by mass, with respect to the amount of the synthetic resin. When the amount is less than 0.001% by mass, the ultraviolet radiation-absorbing effect may not be sufficient, whereas when the amount is greater than 20% by mass, the transparency of the film may be reduced.

In the Method 2 in which a paint is prepared and then coated, a method of preparing a paint by dissolving the ultraviolet absorber represented by the Formula (1) or (2) in a binder resin and an organic solvent, or a method of preparing an aqueous paint by dissolving or dispersing the ultraviolet absorber represented by the Formula (1) or (2) in a binder resin and an aqueous solvent can be employed.

In the former method, for example, an aliphatic ester-based resin, an acrylic resin, a melamine resin, a urethane resin, an aromatic ester-based resin, a polycarbonate resin, an aliphatic polyolefin resin, an aromatic polyolefin resin, a polyvinyl-based resin, a polyvinyl alcohol resin, a polyvinyl-based modified resin (such as PVB or EVA) or a copolymer of these resins is used as the binder. As the solvent, a halogen-based, alcohol-based, ketone-based, ester-based, aliphatic hydrocarbon-based, aromatic hydrocarbon-based or ether-based solvent, or a mixed system thereof is used.

In the latter case, for example, a method of dissolving or dispersing the ultraviolet absorber represented by the Formula (1) or (2) in an aqueous binder resin, or a method of making the ultraviolet absorber represented by the Formula (1) or (2) into fine particles of several micrometers or less in size and then preparing an emulsion by dispersing the fine particles in an aqueous solvent using an emulsifier as required can be employed.

Examples of the aqueous binder resin include polyvinyl alcohols and modification products thereof; polyacrylic acids and copolymers thereof; and cellulose and modification products thereof. Examples of the aqueous solvent include water; and solvents prepared by adding an alcohol such as methyl alcohol, a ketone such as acetone or an ether such as tetrahydrofuran to water.

Further, examples of the emulsion include those in which pulverized ultraviolet absorber represented by the Formula (1) or (2) (50 to 500 nm) is dispersed in an uncolored acrylic emulsion paint such as an acrylic emulsion-type aqueous paint dispersed in an acrylic emulsion.

In the Method 2, the ultraviolet absorber represented by the Formula (1) or (2) is added in an amount of preferably 0.001 to 20% by mass, more preferably 0.01 to 10% by mass, particularly preferably 0.1 to 5% by mass, with respect to the total amount of the binder resin and the synthetic resin of the base material on which coating is performed. When the amount is less than 0.001% by mass, the ultraviolet radiation-absorbing effect may not be sufficient, whereas when the amount is greater than 20% by mass, the transparency of the film may be reduced.

In the paint or coating liquid, in addition to an additive(s) usually used in paints such as a near-infrared absorber, an antioxidant and/or a light stabilizer, a dye or a pigment for controlling the color tone or other ultraviolet absorber may also be added. The paint or coating liquid prepared by the above-described method is coated on a synthetic resin film or sheet which serves as a base material by using a bar coater, a gravure coater, a comma coater, a rip coater, a curtain coater, a roll coater, a blade coater, a spin coater, a reverse coater or a die coater or by spraying or the like, thereby the light-blocking film is prepared. It is also possible to arrange a protective layer for protecting the coated surface or to laminate a transparent resin plate, a transparent resin film or the like on the coated surface. Further, a cast film is also included in this method.

In the Method 3 in which a laminated resin film or sheet is prepared using an adhesive in which the ultraviolet absorber represented by the Formula (1) or (2) is incorporated, a known transparent adhesive, such as an adhesive for common resins such as silicon-based, urethane-based and acrylic resins, a polyvinyl butyral (PVB) adhesive or an ethylene-vinyl acetate (EVA) adhesive, can be used as the adhesive. Using an adhesive in which the ultraviolet absorber represented by the Formula (1) or (2) is incorporated, resin films are adhered with each other to prepare the light-blocking film. Alternatively, a thermocompression bonding method can be employed as well.

The ultraviolet absorber represented by the Formula (1) or (2) is added in an amount of preferably 0.001 to 20% by mass, more preferably 0.01 to 10% by mass, particularly preferably 0.1 to 5% by mass, with respect to the total amount of the solid content of the adhesive and the synthetic resin of the base material. When the amount is less than 0.001% by mass, the ultraviolet radiation-absorbing effect may not be sufficient, whereas when the amount is greater than 20% by mass, the transparency of the film may be reduced.

Next, the resin used as a base material of the light-blocking film of the present invention will be described. The resin used as the base material is not particularly restricted; however, it is preferably transparent.

Examples of such a resin include cellulose esters such as diacetyl cellulose, triacetyl cellulose (TAC), propionyl cellulose, butyryl cellulose, acetylpropionyl cellulose and nitrocellulose; polyamides such as nylon 6 and nylon 66; polyimides; polyurethanes; epoxy resins; polycarbonates; polyesters such as polyethylene terephthalate, polyethylene naphthalate, polybutylene terephthalate, poly-1,4-cyclohexane dimethylene terephthalate, polyethylene-1,2-diphenoxyethane-4,4'-dicarboxylate and polybutylene terephthalate; polystyrenes; polyolefins such as polyethylene, polypropylene, polymethylpentene and copolymers of polyethylene and cycloolefin such as norbornene; vinyl compounds such as polyacrylonitrile, polyvinyl acetate, polyvinyl chloride and polyvinyl fluoride; copolymers of vinyl compounds or fluorocarbon compounds, such as polyvinylidene chloride, polyvinylidene fluoride, polyvinylidene cyanide, vinylidene fluoride-trifluoroethylene copolymers, vinylidene fluoride-tetrafluoroethylene copolymers and vinylidene cyanide-vinyl acetate copolymers; acrylic resins such as polyacrylic acid, polymethyl methacrylate and polyacrylate; fluorine-containing compounds such as polyhexafluoropropylene; polycarbonates; polysulfones; polyether sulfones; polyether ketones; polyether imides; polyethers such as polyoxymethylene, polyethylene oxide and polypropylene oxide; polyvinyl alcohols; polyvinyl butyrals; and norbornene resins.

Among these resins, polyester resins and norbornene resins are preferred.

The above-described resins may be used individually or, depending on the application, two or more thereof may be used in the form of a mixture and/or a copolymer, or may be laminated with each other.

The light-blocking film of the present invention may have a single-layer structure or a laminated multilayer structure. The light-blocking film of the present invention may have a multilayer structure as long as the ultraviolet absorber represented by the Formula (1) or (2) is used in at least layer.

In the base material resin of the light-blocking film of the present invention, as required, a variety of additives may be used, and the base material resin may also be subjected to a surface treatment.

Examples of the additives include antioxidants (such as phenolic, phosphorus-based or thioether-based antioxidants); ultraviolet absorbers other than the triazine compound of the present invention; hindered amine-based light stabilizers; nucleating agents; antistatic agents; light-absorbing dyes; pigments; dyes; lubricants; processing aids; plasticizers; metal deactivators; and flame retardants such as inorganic fine particles, halogen-containing compounds, phosphate compounds, phosphoric acid amide compounds, melamine compounds, fluorocarbon resins, silicon resins, metal oxides, melamine (poly)phosphates and piperazine (poly)phosphates.

Examples of the phenolic antioxidants include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylene-bis[(3,5-di-tert-butyl-4-hydroxyphenyl)propionic acid amide], 4,4'-thiobis(6-tert-butyl-m-cresol), 2,2'-methylene-bis(4-methyl-6-tert-butylphenol), 2,2'-methylene-bis(4-ethyl-6-tert-butylphenol), 4,4'-butylidene-bis(6-tert-butyl-m-cresol), 2,2'-ethylidene-bis(4,6-di-tert-butylphenol), 2,2'-ethylidene-bis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, thiodiethylene glycol-bis[(3,5-di-tert-butyl-4-hydroxyphenyl)propionate], 1,6-hexamethylene-bis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalate, 1,3,5-tris[(3,5-di-tert-butyl-4-hydroxyphenyl)propionyloxyethyl]isocyanurate, 3,9-bis[1,1-dimethyl{(3-tert-butyl-4-hydroxy-5-methylphenyl)propionyloxy}ethyl]-2,4,8,1 0-tetraoxaspiro[5.5]undecane, triethylene glycol-bis[(3-tert-butyl-4-hydroxy-5-methylphenyl)propionate] and tocophenol.

Examples of the phosphorus-based antioxidants include trisnonylphenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidene diphenol diphosphite, tetra(tridecyl)-4,4'-n-butylidene-bis(2-tert-butyl-5-methylphenol) diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylene-bis(4,6-tert-butylphenyl)-2-ethylhexyl phosphite, 2,2'-methylene-bis(4,6-tert-butylphenyl)-octadecyl phosphite, 2,2'-ethylidene-bis(4,6-di-tert-butylphenyl)fluorophosphite, tris(2-[(2,4,8,10-tetrakis-tert-butyldibenzo[d,f][1,3,2]dioxaphosphepin-6-yl)oxy]ethyl)amine, 2-(1,1-dimethylethyl)-6-methyl-4-[3-[[2,4,8,10-tetrakis(1,1-dimethylethyl)dibenzo[d,f][1,3,2] dioxaphosphepin-6-yl]oxy]propyl]phenol, and phosphites of 2-ethyl-2-butylpropylene glycol and 2,4,6-tri-tert-butylphenol.

Examples of the thioether-based antioxidants include dialkyl thiodipropionates such as dilauryl thiodipropionate, dimyristyl thiodipropionate and distearyl thiodipropionate; and β-alkylmercaptopropionates of polyols, such as pentaerythritol-tetra(β-dodecylmercaptopropionate).

Examples of the ultraviolet absorbers other than the triazine compound of the present invention include benzotriazole-based, benzophenone-based and benzoate-based ultraviolet absorbers, as well as triazine-based ultraviolet absorbers other than those represented by the Formula (1) or (2).

Examples of the benzotriazole-based ultraviolet absorbers include, but not particularly limited to, 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2-(2'-hydroxy-3'-tert-butyl-5'-carboxyphenyl)benzotriazole and 2,2'-methylene-bis(4-tert-octyl-6-benzotriazolyl)phenol.

Examples of the benzophenone-based ultraviolet absorbers include, but not particularly limited to, 2-hydroxybenzophenones such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone).

Examples of the benzoate-based ultraviolet absorbers include, but not particularly limited to, phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate and hexadecyl-3,5-di-tert-butyl-4-hydroxybenzoate.

Examples of the triazine-based ultraviolet absorbers other than those represented by the Formula (1) or (2) include triaryltriazines such as 2-(2-hydroxy-4-octoxyphenyl)-4,6-bis(2,4-dimethylphenyl)-s-triazine, 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-bis(2-hydroxy-4-octoxyphenyl)-6-(2,4-dimethylphenyl)-s-triazine, 2,4,6-tris(2-hydroxy-4-octoxyphenyl)-s-triazine and 2-(4-isooctyloxycarbonylethoxyphenyl)-4,6-diphenyl-s-triazine.

Examples of the hindered amine-based light stabilizers include hindered amine compounds such as 2,2,6,6-tetramethyl-4-piperidyl stearate, 1,2,2,6,6-pentamethyl-4-piperidyl stearate, 2,2,6,6-tetramethyl-4-piperidylbenzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidylbutane tetracarboxylate, tetrakis(1,2,2,6,6-pentamethyl-4-piperidylbutane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,6,6-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1, 5,8,12-tetraazadodecane, 1,5,8,12-tetrakis[2,4-bis(N-butyl-N-(1,2,2,6,6-pentamethyl-4-piperidyl)amino)-s-triazine-6-yl ]-1,5,8,12-tetraazadodecane, 1,6,11-tris[2,4-bis(N-butyl-N-(2,2,6,6-tetramethyl-4-piperidyl)amino)-s-triazine-6-ylaminoun decane,and 1,6,11-tris[2,4-bis(N-butyl-N-(1,2,2,6,6-pentamethyl-4-piperidyl)amino)-s-triazine-6-ylamino undecane.

Examples of the nucleating agents include metal salts of benzoic acids such as aluminum p-tert-butylbenzoate and sodium benzoate; metal salts of aromatic phosphoric acid esters, such as sodium bis(2,4-di-t-butylphenyl)phosphate, sodium methylene-bis(2,4-di-t-butylphenyl)phosphate and hydroxyaluminum bis[methylene-bis(2,4-di-t-butylphenyl)phosphate]; mixtures of a metal aromatic phosphate and an alkali metal compound; dibenzylidene sorbitols such as dibenzylidene sorbitol, bis(methylbenzylidene)sorbitol and bis(dimethylbenzylidene sorbitol); metal salts of amino acids; and metal salts of rosin acid.

Examples of the antistatic agents include cationic antistatic agents such as fatty acid quaternary ammonium ion salts and polyamine quaternary salts; anionic antistatic agents such as higher alcohol phosphates, higher alcohol EO adducts, polyethylene glycol fatty acid esters, anionic alkyl sulfonates, higher alcohol sulfates, higher alcohol ethylene oxide adduct sulfates and higher alcohol ethylene oxide adduct phosphates; nonionic antistatic agents such as polyhydric alcohol fatty acid esters, polyglycol phosphates and polyoxyethylene alkyl allyl ethers; and amphoteric antistatic agents such as amphoteric alkyl betaines (e.g., alkyldimethylamino acetic acid betaine) and imidazoline-type amphoteric surfactants. These antistatic agents may be used individually, or two or more thereof may be used in combination.

Further, examples of the surface treatment include chemical treatment, mechanical treatment, corona discharge treatment, flame treatment, ultraviolet irradiation treatment, high-frequency wave treatment, glow discharge treatment, active plasma treatment, laser treatment, mixed acid treatment and ozone oxidation treatment. By performing a surface treatment, a large number of irregularities, lines or the like can be formed on the surface.

The light-blocking film of the present invention may be directly used as a film or a sheet; however, it is also preferred to use the light-blocking film by laminating it on a glass, a resin glass, a building material, a transparent board, a synthetic resin plate, a synthetic resin film, a synthetic resin sheet or the like. The thickness of the light-blocking film is not particularly restricted; however, it is preferably 10 to 200 µm.

The use of the light-blocking film of the present invention is not particularly restricted as long as it is used for the purpose of blocking ultraviolet radiation or blocking ultraviolet radiation and heat ray (near-infrared radiation), and the light-blocking film of the present invention can be used in, for example, window glasses of vehicles such as automobiles, trains and airplanes; window glasses of residential houses, buildings, factories and the like; curtains of residential houses, buildings, factories and the like; partitions of residential houses, buildings, factories and the like; window glasses, curtains and partitions of clean rooms; display windows and showcases; vending machine panels; covers, cases and packaging materials of electrical and electronic instruments; covers, cases and packaging materials of electrical and electronic materials; covers, cases and packaging materials of photo-curable materials and photo-reactive materials; protection films of display devices such as cellular phones, televisions and personal computers; lenses of glasses and sunglasses; lenses of optical instruments; and various packaging materials.

### EXAMPLES

The present invention will now be described in detail by way of examples thereof. However, the present invention is not restricted to the following examples by any means.

### [Example 1]

A resin solution containing 0.5 parts by mass of Compound No. 1 as an ultraviolet absorber and 2,000 parts by mass of dichloromethane as a solvent with respect to 100 parts by mass of a norbornene resin (manufactured by JSR Corporation, trade name: ARTON F5023) was flow-casted on a surface-polished glass plate using a bar coater. The flow-casted resin solution was pre-dried at 50°C for 20 minutes and then dried at 90°C for 30 minutes to prepare a film of 80 to 90 µm in thickness, which was subsequently cut to obtain a 2 cm × 2 cm square light-blocking film test piece.

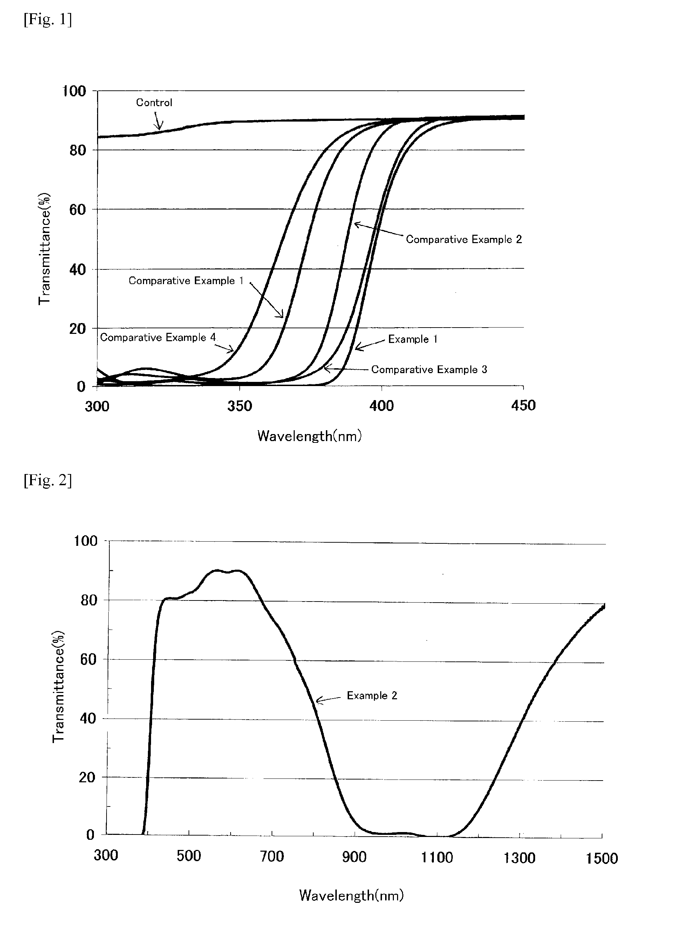

The UV absorption spectrum of the thus obtained light-blocking film test piece was measured. This measurement was performed using V-670 manufactured by JASCO Corporation. The thus obtained absorption spectrum is shown in Fig. 1.

Further, in Fig. 1, the UV absorption spectrum of a film containing no ultraviolet absorber is also shown as a control.

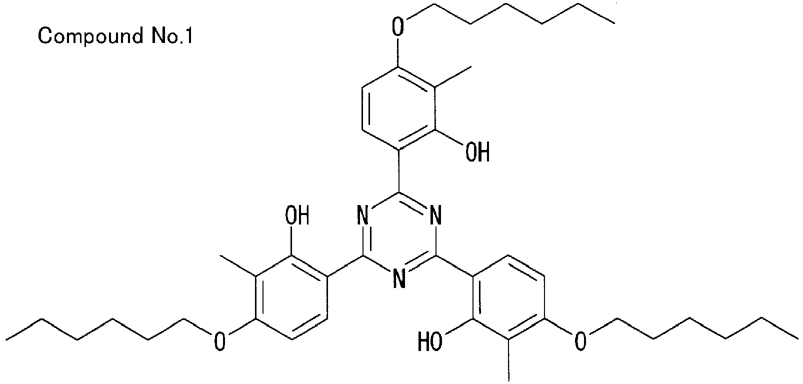

### [Comparative Example 1]

A comparative film test piece was obtained and its UV absorption spectrum was measured in the same manner as in Example 1, except that the following Compound No. 6, a monohydroxyphenyl triazine compound having a structure similar to that of the triazine compound of the present invention, was used as an ultraviolet absorber in place of Compound No. 1. The result thereof is shown in Fig. 1.

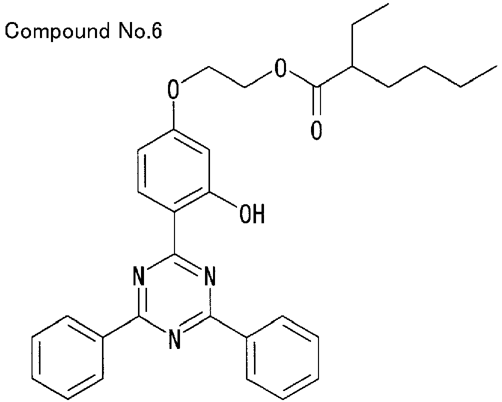

### [Comparative Example 2]

A comparative film test piece was obtained and its UV absorption spectrum was measured in the same manner as in Example 1, except that the following Compound No. 7, a benzotriazole-based ultraviolet absorber, was used as an ultraviolet absorber in place of Compound No. 1. The result thereof is shown in Fig. 1.

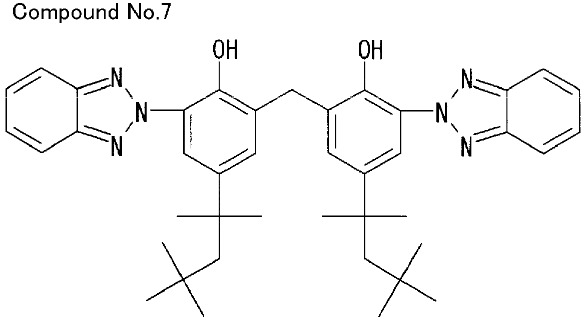

### [Comparative Example 3]

A comparative film test piece was obtained and its UV absorption spectrum was measured in the same manner as in Example 1, except that the following Compound No. 8, a benzotriazole-based ultraviolet absorber, was used as an ultraviolet absorber in place of Compound No. 1. The result thereof is shown in Fig. 1.

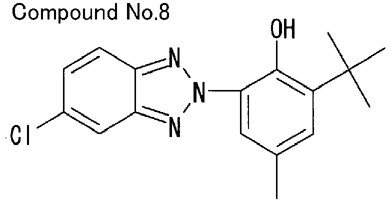

### [Comparative Example 4]

A comparative film test piece was obtained and its UV absorption spectrum was measured in the same manner as in Example 1, except that the following Compound No. 9, a benzophenone-based ultraviolet absorber, was used as an ultraviolet absorber in place of Compound No. 1. The result thereof is shown in Fig. 1.

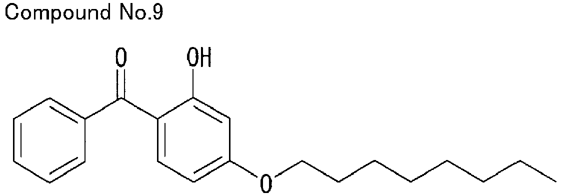

From the results of Example 1 and Comparative Examples 1 to 4 shown in Fig. 1, it is seen that the light-blocking film of the present invention efficiently blocks ultraviolet radiation and that it is particularly effective in blocking ultraviolet radiation in a long wavelength region of 380 nm to 400 nm. In contrast, it was found that the light-blocking films of Comparative Examples, in which other ultraviolet absorber was used, had poor ultraviolet radiation-blocking ability and that they are particularly ineffective in blocking ultraviolet radiation in a long wavelength region of 380 nm to 400 nm.

### [Example 2]

A resin solution containing 0.5 parts by mass of Compound No. 1 as an ultraviolet absorber, 0.3 parts by mass of a diimonium compound (manufactured by Nippon Kayaku Co., Ltd., trade name: IRG-08) as a near-infrared absorber and 2,000 parts by mass of dichloromethane as a solvent with respect to 100 parts by mass of a norbornene resin (manufactured by JSR Corporation, trade name: ARTON F5023) was flow-casted on a surface-polished glass plate using a bar coater. The flow-casted resin solution was pre-dried at 50°C for 20 minutes and then dried at 90°C for 30 minutes to prepare a film of 80 to 90 µm in thickness, which was subsequently cut to obtain a 2 cm × 2 cm square light-blocking film test piece.

The light absorption spectrum of the thus obtained light-blocking film test piece was measured. This measurement was performed using V-670 manufactured by JASCO Corporation. The thus obtained absorption spectrum is shown in Fig. 2.

From Fig. 2, it is seen that the light-blocking film of the present invention efficiently blocks both ultraviolet radiation, particularly in a long wavelength region of 380 nm to 400 nm, and near-infrared radiation.

### [Example 3]

A polyethylene terephthalate pellet (manufactured by UNITIKA Ltd., product name: 1203) and, as an ultraviolet absorber, the ultraviolet absorber of Compound No. 1 were mixed at a mass ratio of 1:0.012. The resulting mixture was melted at a temperature of 260 to 280°C and extruded using an extruder to prepare a 100 µm-thick film. This film was then biaxially stretched to prepare a 25 µm-thick light-blocking film. This light-blocking film was found to efficiently block ultraviolet radiation in a long wavelength region of 380 nm to 400 nm.

## Claims

1. A light-blocking film, comprising at least one triazine compound represented by the following Formula (1) as an ultraviolet absorber or having said triazine compound coated thereon: 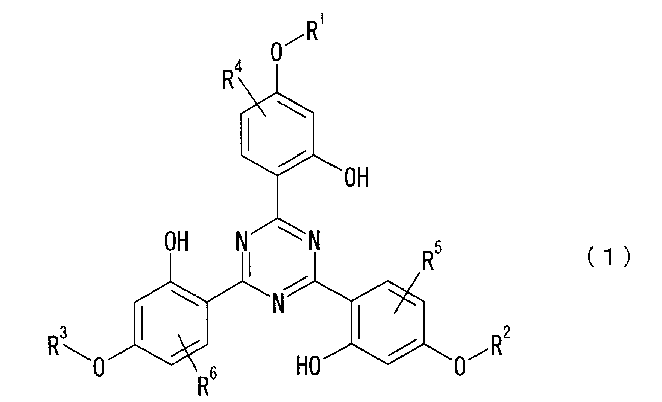 (wherein, R¹ to R³ may be the same or different and each represent a linear or branched alkyl group having 1 to 12 carbon atoms, a cycloalkyl group having 3 to 8 carbon atoms, an alkenyl group having 2 to 8 carbon atoms, an aryl group having 6 to 18 carbon atoms, an alkylaryl group having 7 to 18 carbon atoms or an arylalkyl group having 7 to 18 carbon atoms, with a proviso that said alkyl, cycloalkyl, alkenyl, aryl, alkylaryl and arylalkyl groups are optionally substituted with a hydroxy group, a halogen atom, an alkyl or alkoxy group having 1 to 12 carbon atoms and optionally interrupted by an oxygen atom, a sulfur atom, a carbonyl group, an ester group, an amide group or an imino group, said substitution and interruption optionally existing in combination; and R⁴ to R⁶ may be the same or different and each represent an alkyl group having 1 to 8 carbon atoms or an alkenyl group having 2 to 8 carbon atoms).

2. The light-blocking film according to claim 1, wherein said triazine compound is a triazine compound represented by the following Formula (2): 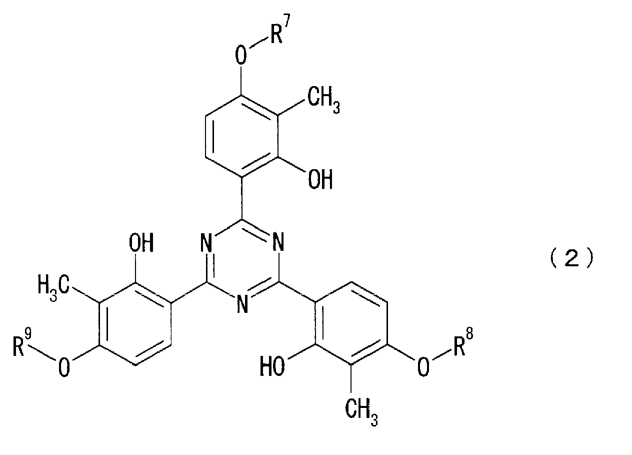 (wherein, R⁷ to R⁹ may be the same or different and each represent a linear or branched alkyl group having 1 to 12 carbon atoms, with a proviso that these alkyl groups are optionally substituted with a hydroxy group, a halogen atom or an alkoxy group and optionally interrupted by an oxygen atom, a sulfur atom, a carbonyl group, an ester group, an amide group or an imino group).

3. The light-blocking film according to claim 1, wherein said triazine compound is kneaded into a synthetic resin used as a base material of said film.

4. The light-blocking film according to claim 1, wherein said triazine compound is coated on a base film.

5. The light-blocking film according to claim 1, further comprising a near-infrared absorber or having said near-infrared absorber coated on the surface.
